# FASCICULE DE BREVET EUROPEEN

(11) **EP 1 452 028 B1**
(45) Date de publication et mention de la délivrance du brevet: **19.07.2006**
(21) Numéro de dépôt: 02743331.7
(22) Date de dépôt: 24.05.2002
(51) Int. Cl.: H04N 7/173, H04N 7/16, H04L 29/06

(54) **PROCEDE DE GESTION DE FOURNITURE D'ACCES A UN CONTENU CRYPTE DESTINE A ETRE DIFFUSE SUR UN RESEAU, AINSI QUE SYSTEME ET SERVEUR POUR LA MISE EN OEUVRE DE CE PROCEDE**
VERWALTUNGSVERFAHREN ZUR BEREITSTELLUNG EINES ZUGANGES ZU EINEM VERSCHLÜSSELTEN, AUF EINEM NETWERK ZU ÜBERTRAGENEN INHALT, SOWIE SYSTEM UND SERVER ZUR DURCHFÜHRUNG DIESES VERFAHRENS
METHOD FOR MANAGING ACCESS PROVISION TO AN ENCRYPTED CONTENT TO BE BROADCAST ON A NETWORK, SYSTEM AND SERVER THEREFOR

(30) Priorité: 05.12.2001 FR 0115720
(43) Date de publication de la demande: 01.09.2004
(73) Titulaire: FRANCE TELECOM, 75015 Paris (FR)
(72) Inventeur: BERTIN, Christian, F-35000 Rennes (FR); CODET, André, F-35200 Rennes (FR); FEVRIER, Pierre, F-35250 St Sulpice la Forêt (FR)
(74) Mandataire: Remy, Vincent Noel Paul
(86) Numéro de dépôt international: PCT/FR2002/001762
(87) Numéro de publication internationale: WO 2003/049443

(56) Documents cités:
- WO-A-00/30354
- WO-A-01/13635
- WO-A-01/35571
- VAN SCHOONEVELD D: "Standardization of conditional access systems for digital pay television" PHILIPS JOURNAL OF RESEARCH, ELSEVIER, AMSTERDAM, NL, vol. 50, no. 1, 1996, pages 217-225, XP004008213 ISSN: 0165-5817

## Description

La présente invention concerne un procédé de fourniture d'accès à un contenu crypté destiné à être diffusé sur un réseau et des système, serveurs, signal et terminaux pour la mise en oeuvre de ce procédé.

On connaît déjà dans l'état de la technique un procédé de fourniture d'accès à un contenu crypté destiné à être diffusé sur un réseau, du type comportant les étapes suivantes :
- la transmission, par un terminal d'acquisition de droit d'accès, d'une demande d'accès au contenu à un serveur de gestion de fourniture d'accès ;
- l'émission, par le serveur de gestion, d'un signal comportant une clé de décryptage du contenu destiné à être diffusé, dit signal à clé.

Un procédé de ce type est appliqué notamment pour la fourniture d'un accès payant à des données audiovisuelles diffusées, telles que par exemple une émission de télévision. Ce procédé est désigné habituellement par les termes anglo-saxons « pay-per-view ».

Dans ce cas, la souscription à un abonnement permet de recevoir un code confidentiel associé à cet abonnement. Le consommateur du contenu diffusé est équipé de moyens de réception de signaux de télévision. Le contenu diffusé est reçu crypté par les moyens de réception. Ces derniers, comprenant le terminal d'acquisition de droit d'accès, sont équipés de moyens permettant de recueillir le code confidentiel pour autoriser le décryptage du contenu diffusé.

La facture de consommation du contenu diffusé est envoyée à la personne ayant souscrit l'abonnement auquel est associé le code confidentiel utilisé.

Un procédé du type précité est également adapté pour la fourniture d'un accès payant à un contenu diffusé sur le réseau Internet.

Dans ce cas, lorsque le terminal d'acquisition de droit d'accès fait une demande (généralement validée par un paiement) au serveur de gestion pour accéder au contenu diffusé, ce serveur de gestion fournit directement la clé de décryptage au terminal d'acquisition de droit. Cette clé est utilisée immédiatement ou ultérieurement pour décrypter l'événement diffusé à travers le réseau Internet.

Les procédés classiques du type précité proposent donc de fournir les moyens de décryptage (clé) du contenu diffusé en réponse à une demande-d'acquisition de droit d'accès à ce contenu diffusé (qu'il y ait paiement ou non de ce droit d'accès). De ce fait, la fourniture des moyens de décryptage du contenu diffusé intervient dès l'acquisition du droit d'accès à ce contenu, ce qui limite notamment les possibilités de dépister efficacement un droit d'accès au contenu diffusé éventuellement piraté.

Par ailleurs, les moyens de décryptage peuvent être dupliqués facilitant ainsi des accès frauduleux au contenu diffusé.

L'invention vise à remédier à ces inconvénients en fournissant un procédé de fourniture d'accès sécurisé, c'est-à-dire limitant les risques de piratage et de fraude.

WO 01/35571 décrit un procédé de fourniture d'accès à un contenu crypté destiné à être diffusé sur un réseau comportant les étapes suivantes :
- la transmission par un terminal d'acquisition de droit d'accès, d'une demande d'accès au contenu à un serveur de gestion de fourniture d'accès ;
- l'émission par le serveur de gestion, d'au moins un ticket électronique d'autorisation d'accès au contenu, le ticket comportant un identifiant unique connu du serveur de gestion, cette émission de ticket étant exécutée par le serveur de gestion en réponse à la demande d'accès,
- la réception par le serveur de gestion, d'un signal, dit signal d'identification, comportant l'identifiant du ticket et un identifiant d'un terminal consommateur à partir duquel ce signal d'identification a été émis, et
- l'émission par le serveur de gestion d'un signal comportant une clé de décryptage du contenu destiné à être diffusé, dit signal à clé, cette étape d'émission du signal à clé succédant à l'étape de réception.

L'invention a pour objet un procédé de fourniture d'accès à un contenu crypté destiné à être diffusé sur un réseau, du type décrit dans WO 01/35571, caractérisé en ce en ce que la clé de décryptage est générée à partir d'une clé de cryptage du contenu crypté et de l'identifiant du terminal consommateur.

Un tel procédé permet de dissocier l'acquisition d'un droit d'accès à un contenu diffusé sur un réseau de la fourniture des moyens de décryptage de ce contenu. Ceci a pour effet de permettre d'insérer une étape de fourniture d'un signal d'identification du terminal consommateur afin de limiter les risques de piratage et de fraude.

Un procédé de fourniture d'accès selon l'invention peut en outre comporter l'une ou plusieurs des caractéristiques suivantes :
- le signal à dé comporte en outre des informations permettant au terminal consommateur de se mettre en état de recevoir le contenu diffusé sur un canal de transmission prédéterminé ;
- l'étape d'émission de ticket par le serveur de gestion comprend l'émission, vers le terminal d'acquisition de droit d'accès, d'un ensemble d'au moins deux tickets électroniques d'autorisation d'accès à un même contenu ;
- le terminal consommateur est différent du terminal d'acquisition de droit d'accès ;
- chaque ticket est susceptible d'adopter plusieurs états, le serveur de gestion mémorisant des informations lui permettant de connaître, à chaque instant, l'état de chaque ticket ;
- les états d'un ticket sont choisis parmi un ensemble d'états possibles comprenant :
   ■ un état dans lequel le ticket a été transmis au terminal d'acquisition de droit d'accès, mais n'a pas encore été échangé contre une clé de décryptage,
   ■ un état dans lequel le ticket a été échangé contre une clé de décryptage,
   ■ un état dans lequel une opposition sur le ticket a été demandée et obtenue à partir du terminal d'acquisition de droit d'accès,
   ■ un état dans lequel une opposition sur le ticket a été demandée et obtenue à partir du terminal consommateur,
   ■ un état dans lequel un remboursement a été demandé et obtenu à partir du terminal d'acquisition de droit d'accès,
   ■ un état dans lequel un remboursement a été demandé et obtenu à partir du terminal consommateur,
   ■ un état dans lequel un échange contre avoir a été demandé et obtenu à partir du terminal d'acquisition de droit d'accès,
   ■ un état dans lequel un échange contre avoir a été demandé et obtenu à partir du terminal consommateur,
   ■ un état dans lequel le ticket est invalidé, et
   ■ un état dans lequel l'utilisation du ticket est suspendue ;
- si le serveur de gestion reçoit un signal d'identification comportant l'identifiant d'un ticket déjà échangé contre une clé à partir d'un premier terminal consommateur associé à l'identifiant d'un second terminal consommateur différent du premier terminal, alors le serveur de gestion interdit l'émission du signal à clé vers le second terminal consommateur ;
- si le serveur de gestion reçoit un signal d'identification comportant l'identifiant d'un ticket déjà échangé contre une clé à partir d'un premier terminal consommateur, associé à l'identifiant d'un second terminal consommateur différent du premier terminal, alors le serveur de gestion conserve en mémoire l'identifiant du second terminal pour lui interdire tout accès ultérieur à un contenu ;
- la transmission du signal d'identification à partir du terminal consommateur vers le serveur de gestion active dans le serveur de gestion des moyens d'identification de ce terminal consommateur ;
- le réseau est de type Internet;
- suite à l'émission du ticket électronique d'autorisation d'accès au contenu, le procédé comporte une étape de demande de remboursement du ticket;
- l'étape de demande de remboursement du ticket déclenche une succession d'étapes comportant :
   ■ une étape de transmission au serveur de gestion d'un signal d'identification comportant l'identifiant du ticket et l'identifiant du terminal à partir duquel la demande de remboursement est émise,
   ■ une étape de contrôle de l'identité de l'utilisateur, et
   ■ une étape de remboursement du ticket, notamment par un virement sur un compte bancaire ou sur un compte privé ;
- suite à l'émission par le serveur de gestion du ticket électronique d'autorisation d'accès au contenu, le procédé comporte une étape de demande d'opposition sur le ticket électronique ;
- l'étape de demande d'opposition sur le ticket électronique déclenche une succession d'étapes comportant :
   ■ une étape lors de laquelle l'état du ticket est testé pour savoir s'il a été échangé contre une clé,
   ■ une étape de test sur le ticket, pour savoir si ce ticket est opposable, et
   ■ une étape de contrôle de l'identité de l'utilisateur ;
- suite à l'émission du ticket électronique d'autorisation d'accès au contenu, le procédé comporte une étape de demande d'échange de ticket électronique;
- l'étape de demande d'échange de ticket électronique, notamment contre un avoir, déclenche une succession d'étapes comportant:
   ■ une étape de transmission au serveur de gestion d'un signal d'identification comportant l'identifiant du ticket et l'identifiant du terminal à partir duquel la demande d'échange contre avoir a été émise,
   ■ - une étape de contrôle de l'identité de l'utilisateur, et
   ■ - une étape d'échange du ticket, en fournissant un avoir.

L'invention a également pour objet un serveur de gestion de fourniture d'accès à un contenu crypté destiné à être diffusé sur un réseau, comportant :
- des moyens de réception d'une demande d'accès au contenu ;
- des moyens d'émission d'un signal comportant une clef de décryptage du contenu destiné à être diffusé, dit signal à clef,
- des moyens d'émission d'au moins un ticket électronique d'autorisation d'accès au contenu, le ticket comportant un identifiant unique connu du serveur de gestion, ces moyens d'émission de ticket étant activés en réponse à la demande d'accès, et
- des moyens de réception d'un signal, dit signal d'identification, comportant l'identifiant du ticket et un identifiant d'un terminal consommateur à partir duquel ce signal d'identification a été émis, ces moyens de réception étant adaptés pour déclencher l'activation des moyens d'émission du signal à clef,
caractérisé en ce qu'il comporte en outre des moyens de génération de la clef de décryptage à partir d'une clef de cryptage du contenu crypté et de l'identifiant du terminal consommateur.

L'invention a également pour objet un système de fourniture d'accès à un contenu crypté destiné à être diffusé sur un réseau, caractérisé en ce qu'il comprend :
- un serveur de gestion de fourniture d'accès à un contenu crypté tel que défini précédemment; et
- un serveur de diffusion sur le réseau de ce contenu crypté comprenant des moyens de transmission du contenu au terminal consommateur dont la demande d'accès a été émise par le terminal d'acquisition de droit d'accès.

Un système selon l'invention peut en outre comporter la caractéristique selon laquelle les serveurs de gestion et de diffusion partagent une base de données commune contenant des données relatives à la clé de cryptage et/ou de décryptage du contenu et des informations sur le mode de diffusion de ce contenu.

L'invention sera mieux comprise à la lecture de la description qui va suivre, donnée uniquement à titre d'exemple et faite en se référant aux dessins annexés sur lesquels :
- la figure 1 représente schématiquement la structure générale d'un système de fourniture d'accès à un contenu crypté selon l'invention ;
- la figure 2 représente les étapes successives d'un procédé de fourniture d'accès à un contenu crypté selon l'invention ;
- la figure 3 représente une fenêtre de présentation d'un fichier d'achat de tickets pour un événement diffusé, pour la mise en oeuvre du procédé de la figure 2.
- la figure 4 représente une fenêtre de présentation d'un fichier de confirmation d'achats de tickets, pour la mise en oeuvre du procédé représenté à la figure 2 ;
- la figure 5 représente une fenêtre de présentation d'un fichier formant liste de tickets, pour la mise en oeuvre du procédé de la figure 2;
- la figure 6 représente une fenêtre de présentation d'un fichier formant ticket, pour la mise en oeuvre du procédé de la figure 2 ; et
- les figures 7 à 11 représentent des étapes détaillées du procédé de la figure 2.

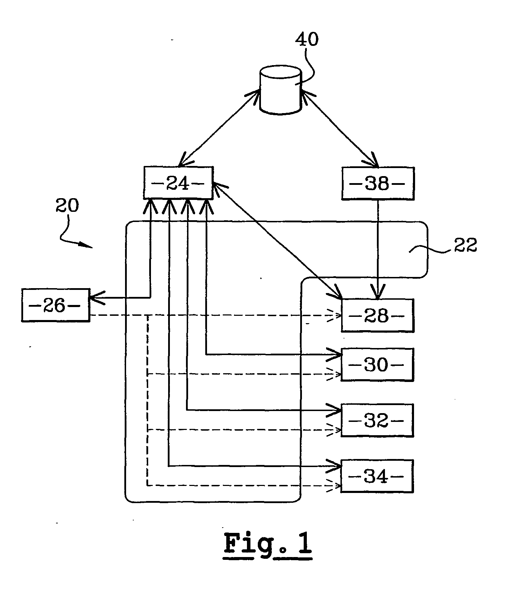

On a représenté sur la figure 1 un système pour la mise en oeuvre d'un procédé de fourniture d'accès à un contenu crypté, encore appelé événement crypté, destiné à être diffusé sur un réseau. Ce système est désigné par la référence générale 20. Dans l'exemple décrit, le réseau, désigné par la référence 22, est notamment le réseau Internet.

Le système 20 comprend au moins un serveur 24 de gestion de fourniture d'accès à un contenu crypté, tel qu'un contenu multimédia, plus particulièrement un contenu audiovisuel. Ce serveur de gestion 24 comporte des moyens d'accès au réseau Internet 22, pour l'échange de données avec d'autres terminaux également connectés au réseau Internet 22.

Ces autres terminaux comprennent un terminal 26 d'acquisition de droit d'accès au contenu, un terminal 28 de consommation du contenu, un terminal 30 de demande d'opposition sur un ticket électronique émis par le serveur de gestion 24, un terminal 32 de demande de remboursement d'un ticket électronique émis par le serveur de gestion 24 et un terminal 34 de demande d'échange d'un ticket électronique contre un avoir.

Le cas échéant, les terminaux 26, 28, 30, 32 et 34 peuvent être constitués par un seul et même terminal.

Le terminal 26 d'acquisition de droit d'accès est adapté pour l'échange de données avec le serveur de gestion 24 via le réseau Internet 22, en vue de l'achat d'un ensemble de tickets d'autorisation d'accès au contenu, dans un premier temps. Le terminal 26 d'acquisition de droit d'accès est également adapté pour l'échange de données via le réseau Internet 22 avec les terminaux 28, 30, 32 et 34, pour la transmission vers ces terminaux d'au moins une partie des tickets achetés, dans un deuxième temps. Cette transmission peut être réalisée par l'envoi de courriers électroniques. Dans un troisième temps, les terminaux 28, 30, 32 et 34 sont adaptés pour l'échange de données avec le serveur de gestion 24 à travers le réseau Internet 22, pour permettre la consommation, l'opposition, le remboursement ou l'échange d'un ticket électronique.

Le système 20 comprend de plus un serveur 38 de diffusion du contenu crypté, comprenant des moyens de transmission, à travers le réseau 22, du contenu crypté au terminal 28 de consommation du contenu.

Les serveurs de gestion 24 et de diffusion 38 partagent une base de données commune 40. La base de données 40 comporte des clés de cryptage et de décryptage des contenus destinés à être diffusés, ainsi que les contenus eux-mêmes.

On décrira ci-dessous un procédé mis en oeuvre par le système 20 pour la fourniture d'accès à un contenu crypté destiné à être diffusé sur un réseau.

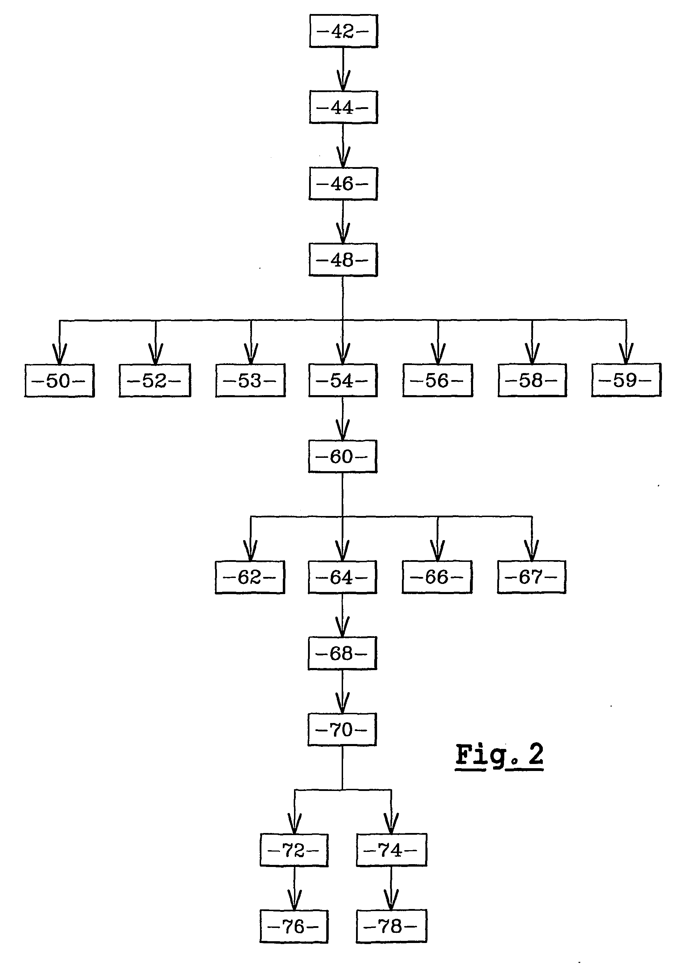

Lors d'une première étape 42, comme représenté sur la figure 2, un acheteur de droit d'accès au contenu crypté se connecte, à partir du terminal 26 d'acquisition de droit d'accès, sur une page de présentation, de type HTML par exemple, du serveur de gestion 24. Cette page HTML présente des informations sur certains événements destinés à être diffusés.

Lors de l'étape 44 suivante, parmi une liste d'événements présentés par le serveur de gestion 24, l'acheteur sélectionne un événement particulier comme, par exemple, un match de football.

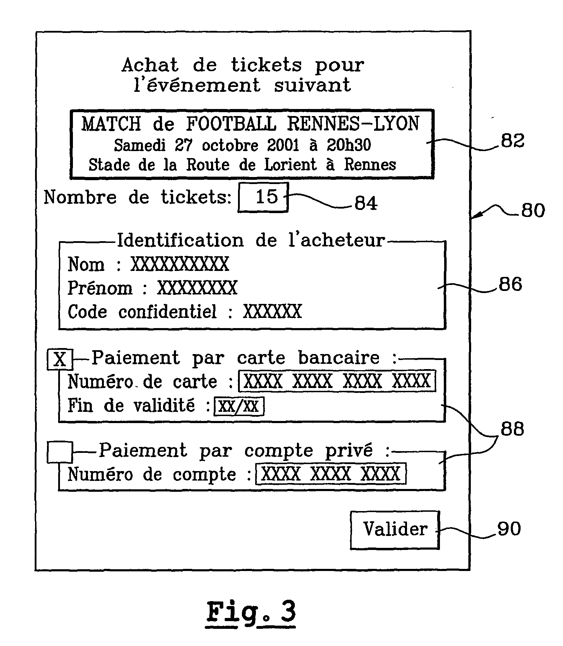

En réponse à cette sélection, lors d'une étape 46 d'achat de tickets électroniques, le terminal 26 d'acquisition de droits d'accès télécharge à partir du serveur de gestion 24 une fenêtre de présentation d'un fichier électronique à remplir par l'utilisateur pour l'achat de tickets. Une telle fenêtre de présentation sera décrite ultérieurement, en référence à la figure 3. L'acheteur valide ensuite son achat et transmet le fichier rempli au serveur de gestion 24.

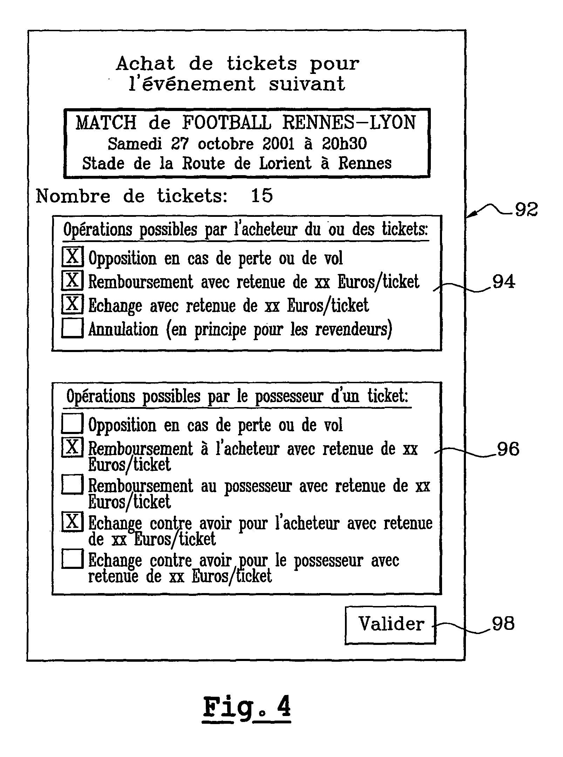

En réponse, le serveur de gestion 24 renvoie vers le terminal 26 d'acquisition de droit d'accès, une fenêtre de présentation d'un fichier de confirmation d'achat. Ce fichier de confirmation que l'acheteur doit compléter sera décrit ultérieurement en référence à la figure 4.

Il permet notamment à l'acheteur de valider ou non un certain nombre d'opérations d'après-vente qu'il souhaite autoriser sur les tickets achetés. Ces opérations comprennent la possibilité par l'acheteur de demander une opposition sur les tickets achetés, un remboursement ou un échange de ces tickets, et la possibilité pour un possesseur final d'un ticket, qui aura reçu ce ticket de la part de l'acheteur, de demander l'opposition sur ce ticket, son remboursement ou un échange.

Ensuite, lors d'une étape 48 de validation de l'achat, l'acheteur paie l'ensemble des tickets avec l'un des moyens de paiement proposés par le serveur de gestion 24. De façon classique, il peut payer par carte bancaire, au moyen d'un compte prépayé, ou à l'aide d'avoirs obtenus à partir d'achats précédents non utilisés.

L'utilisateur peut aussi être quelqu'un qui achète pour un comité d'entreprise, un club ou un service de relations publiques d'une grande compagnie, pour un intermédiaire dans un réseau de distribution hiérarchisé, pour une société de revente de billets. Dans ce cas, le serveur de gestion 24 pourra accepter le paiement après diffusion de l'événement sur le nombre de tickets effectivement utilisés ou revendus.

Après acceptation du paiement, le serveur de gestion 24 transmet au terminal 26 d'acquisition de droits d'accès, l'ensemble des tickets électroniques achetés dans un unique fichier. Dans ce fichier, les tickets sont classés les uns à la suite des autres. Le serveur de gestion 24 transmet également de façon optionnelle les éléments permettant à l'acheteur d'effectuer des opérations d'après-vente comme des demandes d'opposition ou de remboursement à partir d'une liste des tickets émis.

Au cours de ces quatre premières étapes, 42, 44, 46 et 48, le serveur de gestion 24 garde la trace des transactions effectuées. Il conserve notamment en mémoire un identifiant de la transaction, l'identité de l'acheteur (un identifiant, son nom, son prénom, une adresse et un code confidentiel), le montant de la transaction, une identification des modes de paiement et des montants payés, un identifiant de l'événement destiné à être diffusé, le nombre de tickets achetés lors de la transaction, le tarif appliqué aux tickets après accord, les possibilités d'opposition, remboursement ou échange par l'acheteur ou le possesseur final de chacun des tickets, et la liste des numéros de série des tickets vendus.

Le serveur de gestion 24 garde en outre-en-mémoire, pour chaque ticket vendu, un identifiant de ticket comprenant, par exemple, l'identifiant de l'événement, un état du ticket, choisi parmi un ensemble d'états possibles, un identifiant du terminal du possesseur final du ticket dès que l'échange du ticket contre la clé de décryptage a lieu, et un identifiant de la transaction. On notera que l'identifiant du terminal du possesseur final est a priori inconnu à l'achat mais peut être connu lors de l'échange de ce ticket entre et le possesseur final et le serveur de gestion pour obtenir la clé de décryptage.

L'état d'un ticket émis par le serveur de gestion 24 est l'un parmi les éléments d'un ensemble d'états possibles comprenant :
- un état dans lequel le ticket a été transmis au terminal 26 d'acquisition de droit d'accès, mais n'a pas encore été échangé contre une clé de décryptage ;
- un état dans lequel le ticket a été échangé contre une clé de décryptage ;
- un état dans lequel une opposition sur le ticket a été demandée et obtenue par l'acheteur ;
- un état dans lequel une opposition sur le ticket a été demandée et obtenue par le possesseur final ;
- un état dans lequel un remboursement a été demandé et obtenu par l'acheteur ;
- un état dans lequel un remboursement a été demandé et obtenu par le possesseur final ;
- un état dans lequel un échange contre avoir a été demandé et obtenu par l'acheteur ;
- un état dans lequel un échange contre avoir a été demandé et obtenu par le possesseur final ;
- un état dans lequel le ticket est invalidé ; et
- un état dans lequel l'utilisation du ticket est suspendue.

Le terminal 26 d'acquisition de droit d'accès possède un programme pré-installé permettant de traiter le fichier émis par le serveur de gestion 24 pour générer autant de fichiers que de tickets achetés par l'acheteur. Chacun de ces fichiers a un nom composé à partir du nom du fichier émis par le serveur de gestion 24 et du numéro de série du ticket correspondant.

De façon optionnelle, ce programme peut extraire du fichier émis par le serveur de gestion 24 un fichier comportant la liste des tickets achetés pour permettre à l'acheteur de garder une trace des tickets achetés et pour lui faciliter toute opération d'après-vente éventuelle comme l'opposition en cas de perte ou de vol, ou bien la demande de remboursement sur compte ou par avoir pour les tickets non utilisés.

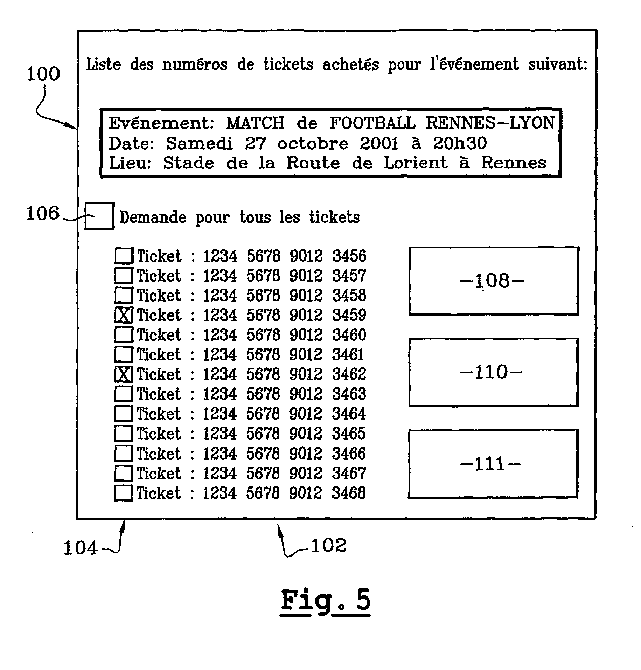

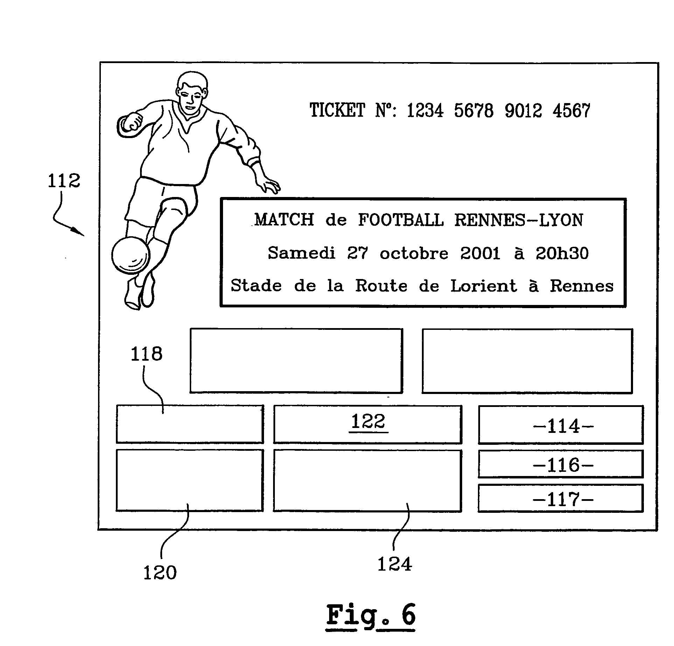

Une fenêtre de présentation d'un tel fichier comportant la liste des tickets achetés sera décrite ultérieurement en référence à la figure 5. De même, une fenêtre de présentation d'un fichier formant ticket électronique sera décrite ultérieurement en référence à la figure 6.

De façon alternative, un procédé selon l'invention peut ne pas nécessiter le téléchargement préalable d'un programme spécifique dans le terminal 26 d'acquisition de droit d'accès. Dans ce cas, le serveur de gestion 24 transmet, par exemple par courrier électronique, un ensemble de fichiers correspondant chacun à un ticket acheté et un fichier résumant la transaction effectuée, avec l'indication des opérations d'après-vente autorisées.

De façon alternative également, le serveur de gestion 24 peut transmettre à l'acheteur sur son terminal 26 d'acquisition de droit d'accès le fichier résumant la transaction effectuée, et transmettre directement les fichiers correspondant aux tickets aux utilisateurs finaux de ces tickets, lorsque celles-ci sont identifiés dès l'achat.

Suite à l'étape 48, on passe à une étape 50, 52, 53, 54, 56, 58 ou 59 en fonction du choix de l'acheteur.

L'étape 50 est une étape de demande de remboursement de tickets à partir de la liste des tickets achetés représentée à la figure 5. L'étape 52 est une étape de demande d'opposition portant sur un ou plusieurs tickets à partir de la liste représentée à la Figure 5. L'étape 53 est une étape de demande d'échange contre un avoir portant sur un ou plusieurs tickets à partir de la liste représentée à la figure 5. L'étape 54 est une étape de distribution des tickets par l'acheteur à des utilisateurs finaux. L'étape 56 est une étape de demande de remboursement d'un ticket à partir du ticket représenté à la figure 6. L'étape 58 est une étape de demande d'opposition sur un ticket à partir du ticket représenté à la figure 6. Enfin, l'étape 59 est une étape de demande d'échange d'un ticket contre un avoir, à partir du ticket représenté à la figure 6.

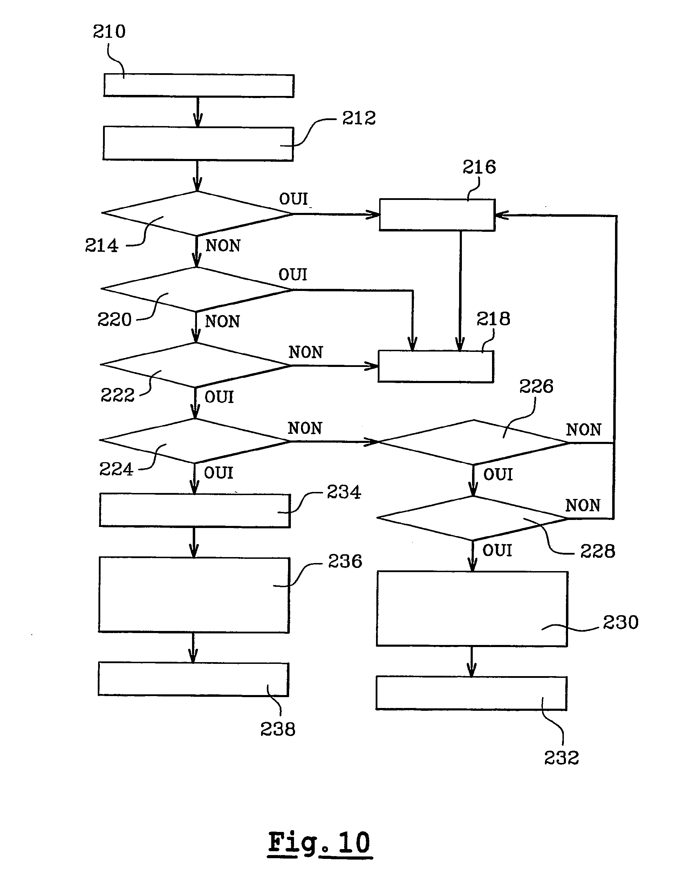

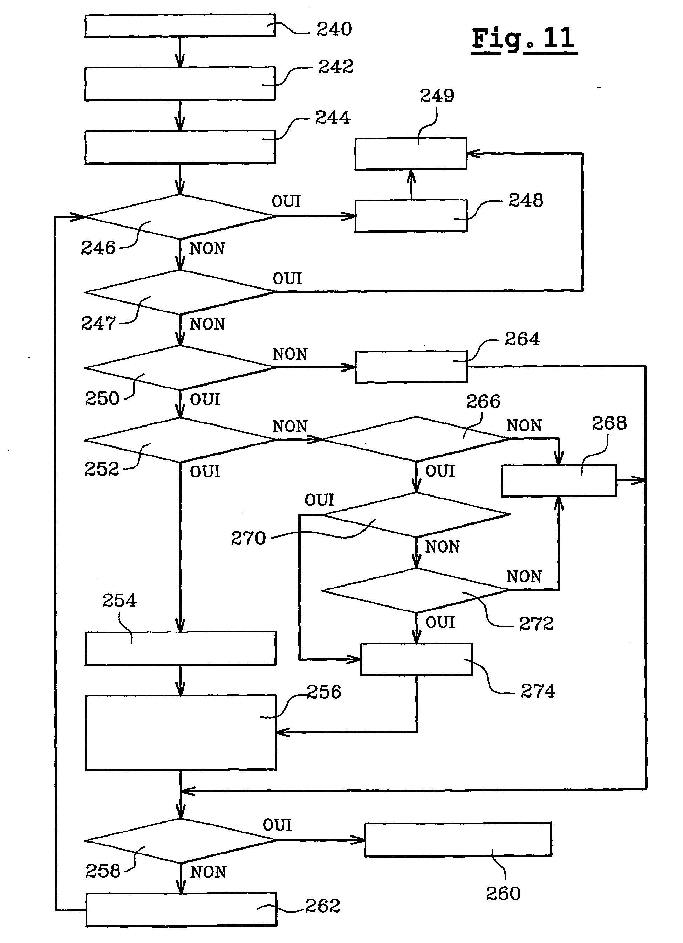

Les étapes 50 et 56 de demande de remboursement seront décrites plus précisément en référence à la figure 10 et les étapes 52 et 58 de demande d'opposition seront décrites plus précisément en référence à la figure 11. Les étapes 53 et 59 de demande d'échange seront décrites plus précisément suite à la description des étapes 50 et 56.

Lors de l'étape 54, l'acheteur de l'ensemble de tickets distribue chaque ticket aux utilisateurs finaux. La transmission est classique et peut se faire, soit par courrier électronique, soit par enregistrement du fichier comportant le ticket sur un support physique amovible tel qu'une disquette, puis transmission de ce support physique par courrier postal.

Un possesseur final quelconque reçoit un fichier correspondant à un ticket, lors de l'étape 60 suivante. Suite à cette étape, on passe à une étape 62, 64, 66 ou 67en fonction du choix du possesseur final.

L'étape 62 est une étape de demande de remboursement de ticket par le possesseur final. L'étape 64 est une étape d'utilisation du ticket. Enfin, l'étape 66 est une étape de demande d'opposition sur un ticket par le possesseur final. Enfin, l'étape 67 est une étape de demande d'échange d'un ticket contre un avoir, par le possesseur final.

De même que les étapes 50, 52, 53, 56, 58 et 59 les étapes 62, 66 et 67 seront décrites ultérieurement en référence aux figures 10 et 11.

Lors de l'étape 64, le possesseur final demande l'échange de son ticket contre une clé de décryptage, à partir du terminal de consommation 28. Pour cela, le terminal de consommation 28 transmet à travers le réseau 22 en direction du serveur de gestion 24, un signal, dit signal d'identification, comportant l'identifiant du ticket et un identifiant du terminal de consommation 28.

Un identifiant du terminal de consommation 28 est par exemple une combinaison de numéros de série de composants de ce terminal. Cette combinaison peut en outre être cryptée et protégée contre toute tentative frauduleuse de génération aléatoire d'identifiants par des moyens classiques.

Au cours de cette étape 64, lorsque le serveur de gestion 24 reçoit le signal d'identification, il contrôle l'état du ticket. Il vérifie notamment que ce ticket n'a pas déjà été échangé à partir d'un autre terminal de consommation que le terminal 28.

L'étape de réception 64 déclenche une étape 68 d'émission, par le serveur de gestion 24 et à destination du terminal de consommation 28, d'un signal comportant une clé de décryptage du contenu destiné à être diffusé. Ce signal sera appelé par la suite signal à clé.

Lors de cette étape le serveur de gestion 24 délivre non seulement le signal à clé, mais encore toutes les informations nécessaires pour que le terminal de réception 28 se mette en état de recevoir le contenu destiné à être diffusé, c'est-à-dire notamment des informations d'identification du canal ou des canaux de diffusion utilisés par le serveur de diffusion 38.

Lors de l'étape 70 suivante, le terminal de réception émet une demande de réception du contenu destiné à être diffusé, commandé au serveur de gestion 24.

Selon que l'utilisateur a demandé à voir ou à enregistrer ce contenu audiovisuel, on passe à une étape 72 de réception, décryptage et affichage du contenu, ou à une étape 74 de réception, décryptage et enregistrement du contenu sur le terminal de consommation 28.

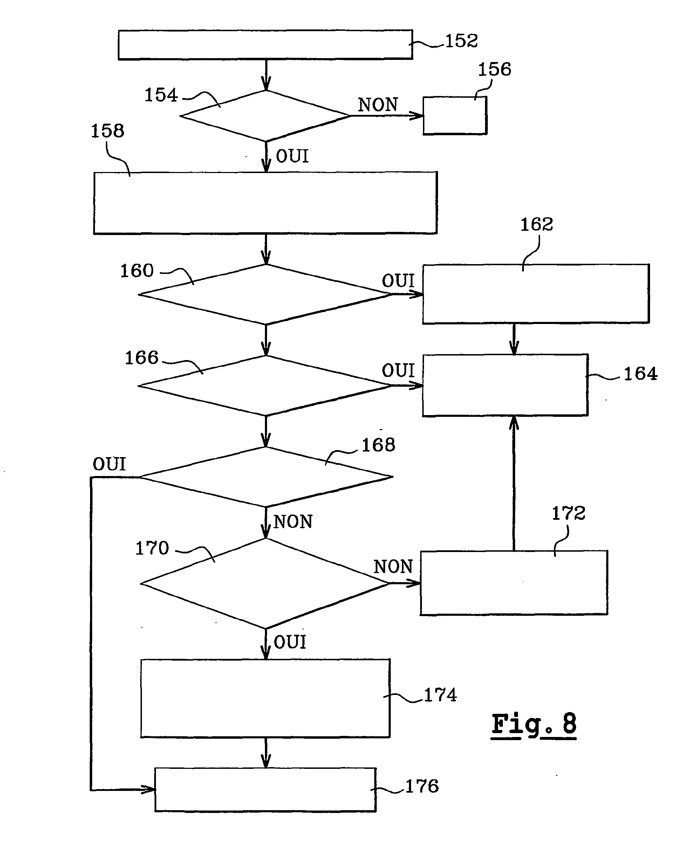

Enfin, à tout moment après les étapes 72 et 74, l'utilisateur peut interrompre la réception du contenu, son décryptage et son affichage ou son enregistrement, lors d'étapes 76 et 78 d'annulation de visualisation et d'annulation d'enregistrement. Ces deux dernières étapes seront détaillées en référence à la figure 8.

La fenêtre de présentation 80 représentée à la figure 3 est affichée à l'écran du terminal 26 d'acquisition de droit d'accès lors de l'étape 46 d'achat du procédé précédemment décrit.

Cette fenêtre de présentation 80 comporte un premier champ 82 décrivant l'objet du contenu destiné à être diffusé, ainsi que sa date et son heure de diffusion.

Elle comporte un deuxième champ 84 à remplir par l'acheteur, pour indiquer le nombre de tickets souhaités par celui-ci pour accéder au contenu indiqué dans le champ 82.

La fenêtre de présentation 80 comporte en outre une zone 86 d'identification de l'acheteur, dans laquelle celui-ci doit indiquer son nom, son prénom et un code confidentiel.

Enfin, la fenêtre de présentation 80 comporte plusieurs zones 88 correspondant chacune à un mode de paiement possible pour l'achat des tickets. Ainsi, si l'acheteur souhaite payer par carte bancaire, il coche la zone 88 correspondante et indique dans cette zone le numéro de sa carte bancaire et la date de la fin de sa validité.

L'acheteur transmet les informations qu'il vient de remplir au serveur de gestion 24 en cliquant sur un icone 90 de validation.

La fenêtre de présentation 92 représentée à la figure 4 s'affiche à l'écran du terminal 26 d'acquisition de droit d'accès en réponse à la réception par le serveur de gestion 24 de la fenêtre précédente 80.

Cette nouvelle fenêtre de présentation 92 affiche le contenu d'un fichier de confirmation d'achat mais comporte en outre certains champs à compléter par l'acheteur.

Elle comporte une zone 94 dans laquelle sont détaillées des opérations possibles sur les tickets achetés, à l'initiative de l'acheteur. Celui-peut autoriser ou non chacune de ces opérations en cochant ou non une case correspondante.

Une première opération possible est, par exemple, une demande d'opposition en cas de perte ou de vol d'un ou plusieurs tickets. Une deuxième opération possible est une demande de remboursement avec retenue d'un certain pourcentage sur chaque ticket. Une troisième opération possible est une demande d'échange de ticket, éventuellement contre un avoir, avec une retenue d'un certain pourcentage par ticket. Enfin, une quatrième opération possible est une demande d'annulation du ticket acheté.

La fenêtre de présentation 92 comporte en outre une zone 96 détaillant un certain nombre d'opérations possibles sur chaque ticket acheté, autorisées par l'acheteur pour le possesseur final du ticket.

Une première opération possible est une demande d'opposition en cas de perte ou de vol d'un ticket. Une deuxième opération possible est une demande de remboursement à l'acheteur avec retenue d'un certain pourcentage du ticket. Une troisième opération possible est une demande de remboursement à un possesseur final avec retenue d'un certain pourcentage du ticket. Une quatrième opération possible est une demande d'échange contre un avoir pour l'acheteur avec une retenue d'un certain pourcentage du ticket. Enfin, une cinquième opération possible est une demande d'échange contre un avoir pour le possesseur final avec retenue d'un certain pourcentage du ticket.

Lorsque l'acheteur a coché les cases correspondant aux opérations possibles qu'il souhaite autoriser, à l'initiative du possesseur final ou à sa propre initiative, il confirme son achat en cliquant sur un icone de validation 98.

La fenêtre de présentation 100 représentée à la figure 5 s'affiche à l'écran du terminal 26 d'acquisition de droit d'accès lors de l'étape 48 de validation d'achat précédemment décrite.

Elle comporte la liste des tickets achetés. Dans cette liste, chaque ticket est associé à son numéro de série 102 et à une case 104 que l'acheteur peut cocher pour sélectionner le ticket correspondant. La fenêtre de présentation 100 comporte en outre une case supplémentaire 106 commune à tous les tickets, que l'acheteur peut cocher s'il souhaite sélectionner tous les tickets.

Si l'acheteur a autorisé le remboursement des tickets en cochant la case correspondante de la fenêtre de présentation 92 de confirmation d'achat, alors la fenêtre de présentation 100 comporte un icone 108 de demande de remboursement. Si l'acheteur clique sur cet icone 108, on passe à l'étape 50 de demande de remboursement des tickets sélectionnés.

De même, si l'acheteur a autorisé une demande d'opposition en cas de perte ou vol en cochant la case correspondante de la fenêtre de présentation 92 de confirmation d'achat, alors la fenêtre de présentation 100 comporte un icone 110 de demande d'opposition. En cliquant sur cet icone 110, on passe à l'étape 52 de demande d'opposition portant sur les tickets sélectionnés.

De même, si l'acheteur a autorisé une demande d'échange des tickets contre un avoir en cochant la case correspondante de la fenêtre de présentation 92 de confirmation d'achat, alors la fenêtre de présentation 100 comporte un icone 111 de demande d'échange. Si l'acheteur clique sur cet icone, on passe à l'étape 53 de demande d'échange des tickets sélectionnés contre un avoir.

La fenêtre de présentation 112 de la figure 6 représente un ticket électronique reprenant des informations telles que le numéro de série du ticket, le contenu audiovisuel destiné à être diffusé associé à ce ticket, et éventuellement des informations supplémentaires sur l'événement destiné à être diffusé.

Ce ticket peut être affiché sur l'écran du terminal 26 d'acquisition de droit d'accès de l'acheteur lors de l'étape 48, ou sur l'écran du terminal de consommation 28 du possesseur final, lors de l'étape 60.

Si l'acheteur a sélectionné les autorisations correspondantes dans le fichier 92 de confirmation d'achat, le ticket électronique 112 peut comporter un icone 114 de demande de remboursement un icone 116 de demande d'opposition et un icône 117 de demande d'échange contre avoir.

Si la demande de remboursement est effectuée lors de l'étape 48 par l'acheteur, en cliquant sur l'icone 114, on passe à l'étape 56 de demande de remboursement. Si cette même demande de remboursement est effectuée par le possesseur final lors de l'étape 60, on passe à l'étape 62 de demande de remboursement.

Si, lors de l'étape 48, l'acheteur clique sur l'icone de demande d'opposition 116, on passe à l'étape 58 de demande d'opposition. Si la même opération est effectuée par le possesseur final, à l'étape 60, on passe à l'étape 66 de demande d'opposition.

Si, lors de l'étape 48, l'acheteur clique sur l'icône de demande d'échange contre un avoir 117, on passe à l'étape 59 de demande d'échange. Si la même opération est effectuée par le possesseur final, à l'étape 60, on passe à l'étape 67 de demande d'échange.

En outre, le ticket électronique 112 comporte un icone de visualisation 118, un icone d'annulation de visualisation 120, un icone d'enregistrement 122, et un icone d'annulation d'enregistrement 124 qui peuvent être sélectionnés par le possesseur final lors de l'étape 60 pour passer aux étapes 64 et suivantes.

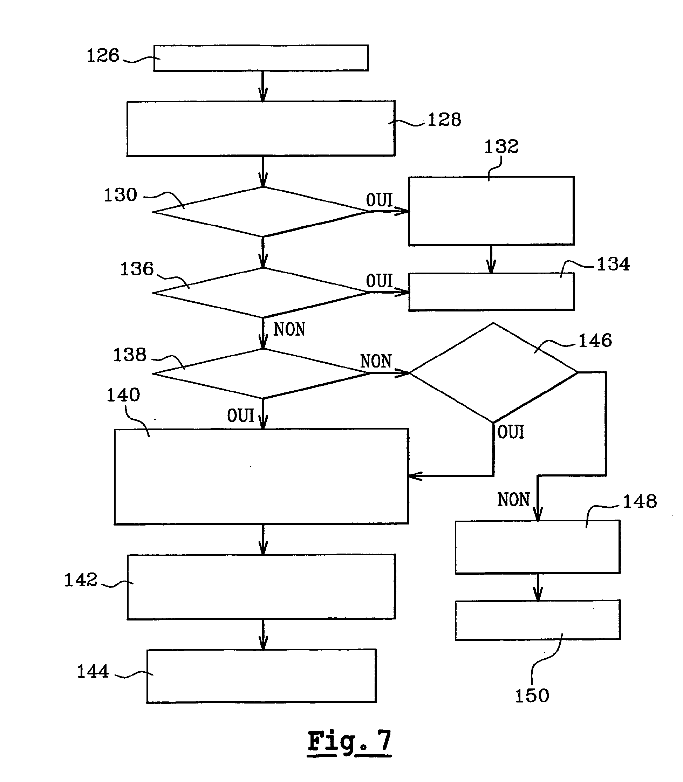

La succession d'étapes qui va être générée suite à l'activation de l'un de ces icones 114 à 124 va maintenant être détaillée en référence aux figures 7 à 11.

La figure 7 représente une succession d'étapes déclenchées par cliquage sur l'icone 118 de visualisation.

Lors d'une première étape 126, le possesseur final clique sur l'icone 118 de visualisation à partir du terminal de consommation 28.

Lors de l'étape 128 suivante, le terminal de consommation 28 transmet au serveur de gestion 24 un signal d'identification comportant l'identifiant du ticket et l'identifiant du terminal de consommation.

Lors de l'étape 130 suivante, le serveur de gestion 24 teste l'existence et la validité du ticket identifié dans le signal d'identification. Si l'identifiant de ticket ne correspond à aucun ticket existant enregistré dans la base de données 40, ou si ce ticket est dans l'état invalide, on passe à une étape 132.

Lors de cette étape 132, le serveur de gestion 24 incrémente d'une unité un compteur d'essais invalides, associé à l'identifiant du terminal de consommation 28.

Ensuite, lors d'une étape 134, le serveur de gestion 24 renvoie au terminal de consommation 28 un message informant l'utilisateur qu'il lui est impossible de visualiser le contenu demandé.

Suite à l'étape 130, si l'identifiant de ticket est existant et valide, on passe à une deuxième étape de test 136 lors de laquelle le serveur de gestion 24 vérifie la valeur du compteur d'essais invalides correspondant à l'identifiant de terminal reçu. Si ce compteur est supérieur ou égal à 1, on passe à l'étape 134, sinon on passe à une étape 138.

Lors de cette étape 138 le serveur de gestion 24 teste l'état du ticket pour savoir si le ticket a été échangé contre une clé de décryptage. S'il n'a pas encore été échangé, on passe à une étape 140 lors de laquelle le serveur de gestion 24 modifie l'état du ticket pour le déclarer comme échangé contre une clé de décryptage. Lors de cette étape également, le serveur de gestion 24 génère une clé de décryptage, par exemple à partir de l'identifiant du terminal de consommation 28 et de la clé de décryptage stockée dans les moyens de stockage 40. Le serveur de gestion 24 stocke également l'identifiant du terminal de consommation 28 avec le ticket.

Lors de l'étape 142 suivante, le serveur de gestion 24 transmet des informations au terminal de consommation 28 lui permettant de se mettre en état de réception du contenu destiné à être diffusé avec la clé de décryptage spécifique au terminal de consommation 28. Ces informations sont des informations sur le mode de diffusion du contenu.

Enfin, lors d'une dernière étape 144, le terminal de consommation 28 se met en situation de réception de l'événement diffusé et affiche cet événement sur son écran de visualisation grâce à la clé de décryptage.

Si, lors de l'étape 138, le ticket est détecté comme ayant été échangé contre une clé, on passe à une étape 146 de test. Lors de cette étape de test, on compare l'identifiant de terminal reçu dans le signal d'identification à l'identifiant du terminal qui a été stocké dans les moyens de stockage 40, terminal à partir duquel le ticket a été échangé contre une clé.

Si les identifiants de terminaux sont identiques, alors on passe à l'étape 140 décrite précédemment. Sinon on passe à une étape 148 dans laquelle on incrémente d'une unité le nombre d'essais invalides associé au terminal identifié par le signal d'identification.

Suite à cette étape 148, on passe à une étape 150 identique à l'étape 134 précédente.

La figure 8 représente une succession d'étapes déclenchées par cliquage sur l'icone 120 d'annulation de visualisation. Cette succession d'étapes constitue l'étape 76 précédemment citée.

Lors d'une première étape 152, l'utilisateur clique sur l'icone 120 d'annulation de visualisation du ticket électronique 112.

Ceci déclenche une étape de test 154, lors de laquelle le terminal de consommation 28 vérifie que l'icone 118 de visualisation a déjà été activé. Si ce n'est pas le cas, on passe à une étape 156 d'arrêt, sinon on passe à l'étape 158 suivante.

Lors de cette étape 158, le terminal de consommation transmet au serveur de gestion 24 le signal d'identification comprenant l'identifiant de ticket et l'identifiant du terminal de consommation 28.

Ensuite, lors d'une étape de test 160, le serveur de gestion 24 vérifie l'existence et la validité du ticket correspondant à l'identifiant de ticket transmis par le signal d'identification.

Si le ticket est inexistant ou à l'état invalide, on passe à une étape 162 de stockage de l'identifiant de machine dans les moyens de stockage 40. Lors de cette étape également, le compteur d'essais invalides associé au terminal de consommation 28, est incrémenté d'une unité.

Ensuite, on passe à une étape 164 lors de laquelle le serveur de gestion 24 informe le terminal de consommation 28 de l'impossibilité d'annuler la visualisation.

Suite à l'étape 160, si le ticket identifié dans le signal d'identification existe et est valide, on passe à une étape 166 pour tester la valeur du compteur d'essais invalide. Si ce compteur est supérieur ou égal à 1, on passe à l'étape 164 décrite précédemment, sinon on passe à une étape 168.

Lors de cette étape 168, on teste l'état du ticket pour savoir s'il a été échangé contre une clé de décryptage.

S'il a été échangé, on passe à une étape 170 de test pour comparer l'identifiant de terminal reçu et l'identifiant du terminal de consommation associé au ticket échangé.

Si les deux identifiants de terminaux sont différents, on passe à une étape 172 lors de laquelle on incrémente d'une unité le compteur d'essais invalides. Suite à cette étape 172, on passe à l'étape 164.

Suite à l'étape 170, si les deux identifiants de terminaux sont identiques, on passe à une étape 174 lors de laquelle le serveur de gestion 24 modifie l'état du ticket, pour déclarer celui-ci comme n'étant pas échangé contre une clé. Puis, il stocke l'identifiant du terminal de consommation.

Enfin, lors d'une dernière étape 176, le serveur de gestion 24 informe le terminal de consommation 28 de l'acceptation de la demande d'annulation de visualisation.

On passe directement à cette étape 176, suite à l'étape 168 de test, si lors de cette étape l'état du ticket a été détecté comme n'étant pas échangé contre une clé de décryptage.

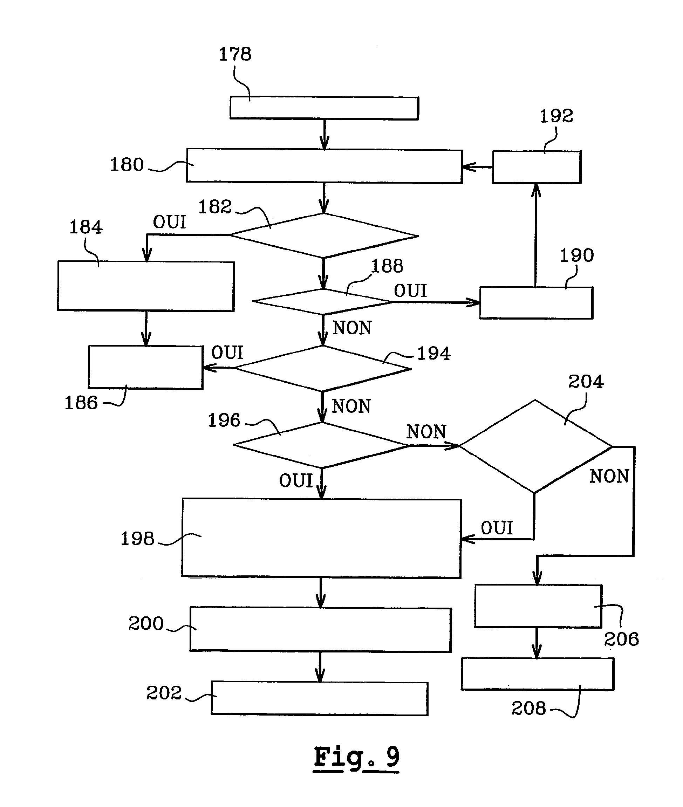

La figure 9 représente une succession d'étapes déclenchées par cliquage sur l'icone 122 d'enregistrement.

Lors d'une première étape 178, l'utilisateur clique sur l'icône de demande d'enregistrement 122 du ticket électronique 112.

Suite à cette étape, les étapes 180, 182 et 184, sont identiques aux étapes 128, 130 et 132 de la figure 7. Elles ne sont donc pas détaillées.

Suite à l'étape 184, on passe à une étape 186, lors de laquelle le serveur de gestion 24 renvoie au terminal de consommation 28 un message informant l'utilisateur qu'il lui est impossible d'enregistrer le contenu demandé.

Suite à l'étape de test 182, si le ticket existe et est valide, on passe à une étape 188 de test, lors de laquelle le serveur de gestion 24 détermine si la demande d'enregistrement est prématurée.

Si c'est le cas, on passe à une étape 190 lors de laquelle le serveur de gestion 24 informe le terminal de consommation 28 qu'il doit retarder sa demande d'enregistrement.

Suite à cette étape, on passe à une étape 192 de temporisation avant de revenir à l'étape 180.

Suite à l'étape 188, si la demande d'enregistrement n'est pas prématurée, on passe à des étapes 194, 196, 198, 200, 202, 204 et 206 identiques respectivement aux étapes 136 à 148 décrites précédemment à la figure 7.

L'étape 208 suivant l'étape 206 est identique à l'étape 186 de la figure 9.

De préférence, cependant, l'étape 202, de mise en réception de la diffusion pour le décryptage et l'enregistrement de l'événement diffusé, comporte une temporisation déclenchant l'enregistrement quelques minutes- seulement avant la diffusion de l'événement.

La succession d'étapes déclenchée par cliquage sur l'icone 124 d'annulation d'enregistrement est identique à la succession d'étapes décrites à la figure 8 déclenchée suite au cliquage sur l'icone d'annulation de visualisation, si ce n'est que la visualisation est remplacée par l'enregistrement. Cette succession d'étapes ne sera donc pas détaillée. Elle constitue l'étape 78 mentionnée à la figure 2.

La figure 10 représente une succession d'étapes déclenchées par cliquage sur un icone de demande de remboursement.

Cette succession d'étapes est exécutée lors de chacune des étapes de demandes de remboursement 50, 56 ou 62 précédemment citées.

Lors d'une première étape 210, l'acheteur clique sur l'icone 108 de demande de remboursement de la fenêtre de présentation 100 de la liste de tickets, ou bien le possesseur final clique sur l'icone 114 de demande de remboursement du ticket électronique 112, à partir du terminal de demande de remboursement 32.

Lors de l'étape 212 suivante, le terminal de demande de remboursement 32 transmet au serveur de gestion 24 un signal d'identification comportant l'identifiant du ticket et l'identifiant du terminal de demande de remboursement 32.

Lors de l'étape 214 suivante, le serveur de gestion 24 teste l'existence et la validité du ticket identifié dans le signal d'identification.

Si ce ticket est inexistant ou invalide, on passe à une étape 216 lors de laquelle le serveur de gestion 24 stocke l'identifiant du terminal 32 dans les moyens de stockage 40 et incrémente d'une unité le compteur d'essais invalides associé à ce terminal.

Ensuite, on passe à une étape 218 d'informations au terminal de demande de remboursement 32 que le remboursement est impossible.

Suite à l'étape 214, si le ticket existe et est valide, on passe à une étape 220 pour tester la valeur du compteur d'essais invalides. Si ce compteur est supérieur ou égal à 1, on passe à l'étape 218, sinon on passe à une étape 222 de test sur l'état du ticket.

Lors de cette étape 222, si le ticket a été échangé contre une clé, on passe également à l'étape 218, sinon c'est que le ticket n'a pas été utilisé, et on passe alors à une étape 224 de test sur le ticket.

Lors de cette étape 224, le serveur de gestion 24 vérifie si le ticket est remboursable au possesseur. Si ce n'est pas le cas, on passe à une étape 226 de test, pour vérifier si ce ticket est remboursable à l'acheteur. Si ce n'est pas le cas de nouveau, on passe à l'étape 216 précédemment décrite.

Si par contre le ticket est remboursable à l'acheteur, on passe à une étape 228 de contrôle de l'identité de l'acheteur. Lors de cette étape, par exemple, on demande à l'utilisateur de fournir son identité et un mot de passe correspondant. Si la réponse est mauvaise, on passe alors de nouveau à l'étape 216, sinon on passe à une étape 230.

L'étape 230 est une étape de remboursement du ticket à l'acheteur, par exemple par virement sur un compte bancaire ou sur un compte privé.

Ensuite, on passe à une étape 232 par laquelle le serveur de gestion 24 informe le terminal de demande de remboursement 32 que le remboursement a été effectué.

Suite à l'étape 224, si le ticket est remboursable au possesseur final, on passe à une étape 234 de demande de coordonnées bancaires ou d'un identifiant de compte privé du possesseur final.

Lors de l'étape 236 suivante, on procède au remboursement du ticket au possesseur final et le ticket est enregistré comme étant remboursé au possesseur final. L'identifiant du terminal de demande de remboursement 32 est également stocké.

Enfin, à l'étape 238 suivante, le serveur de gestion 24 informe le terminal de demande de remboursement, que le remboursement a été effectué.

Le cliquage sur un icone de demande d'échange d'un ticket contre un avoir déclenche une succession d'étapes qui peut être similaire à celle représentée à la figure 10. Nous ne décrirons donc pas dans le détail cette succession d'étapes. Elle est exécutée lors de chacune des étapes de demande d'échange de tickets contre avoir, c'est-à-dire les étapes 53, 59 ou 67 précédemment citées.

La différence entre une demande de remboursement et une demande d'échange de ticket contre un avoir réside essentiellement dans les étapes 230 et 236.

L'étape 232 devient par exemple une étape d'échange du ticket contre un avoir, en créditant un compte d'avoir prédéterminé. De même, lors de l'étape 236, on procède à l'échange du ticket contre un avoir et le ticket est enregistré comme étant échangé pour le possesseur final.

La demande d'échange peut être émise à partir du terminal 34 de demande d'échange. Dans ce cas, l'identifiant du terminal de demande d'échange 34 est également stocké lors de l'étape 236.

La figure 11 représente une succession d'étapes déclenchées par cliquage sur l'icone 116 ou 110 de demande d'opposition. Cette succession d'étapes est exécutée lors de chacune des étapes de demandes d'opposition 52, 58 ou 66 précédemment citées.

La demande d'opposition peut être réalisée à partir du ticket électronique 112 ou de la fenêtre de présentation 100, à partir du terminal de demande d'opposition 30.

Lors d'une première étape 240, l'utilisateur clique sur l'icone 116 de demande d'opposition du ticket électronique 112, ou bien s'il s'agit de l'acheteur, sur l'icone 110 de demande d'opposition de la liste 100. Suite à cette étape, on passe à une étape 242 pendant laquelle le terminal de demande d'opposition 30 transmet au serveur de gestion 24 un signal d'identification comportant l'identifiant du ou des tickets concernés et un identifiant du terminal de demande d'opposition 30.

Lors de l'étape 244 suivante, le serveur de gestion 24 initialise à une chaîne de caractères vide un message de réponse. Lors de cette étape également, il enregistre dans les moyens de stockage 40 que l'identité de l'acheteur n'a pas encore été contrôlée.

Lors de l'étape 246 suivante, le serveur de gestion 24 teste si le ticket existe et est valide.

Si ce n'est pas le cas, on passe à une étape 248, lors de laquelle on incrémente d'une unité le compteur d'essais invalides puis on passe à une étape 249 de transmission à l'utilisateur d'un message l'informant de l'impossibilité d'effectuer l'opposition.

Si lors de l'étape 246 on constate que le ticket existe et est valide, on passe à une étape de test 247 identique à l'étape 136 précédemment décrite. C'est-à-dire que lors de cette étape, le serveur de gestion 24 vérifie la valeur du compteur d'essais invalides correspondant à l'identifiant de terminal reçu. Si ce compteur est supérieur ou égal à 1, on passe à l'étape 249, sinon on passe à une étape 250 lors de laquelle l'état du ticket est testé pour savoir s'il a été échangé contre une clé.

S'il n'a pas déjà été échangé contre une clé, on passe à une étape 252 de test sur le ticket, pour savoir si ce ticket est opposable par le possesseur final.

Si c'est le cas, on passe à une étape 254 au cours de laquelle on met le ticket à l'état « d'opposé par le possesseur ». Puis, on passe à une étape 256 d'ajout au message de réponse du numéro de série du ticket électronique et de la mention « opposition effectuée ».

Suite à cette étape, on passe à une étape 258 de test, pour savoir s'il reste encore des tickets à traiter.

Si c'est le dernier ticket, on passe à une étape 260 de renvoi à l'utilisateur d'un message l'informant de la fin du procédé, sinon on passe à une étape 262 lors de laquelle on passe au ticket suivant. Puis, on passe de nouveau à l'étape 246.

Suite à l'étape 250, si l'on constate que le ticket a été échangé contre une clé, on passe à une étape 264 lors de laquelle le serveur de gestion 24 ajoute au message de réponse le numéro de série du ticket et la mention « opposition impossible ».

Suite à cette étape 264, on passe directement à l'étape 258 précédemment décrite.

Suite à l'étape 252 de test sur le ticket pour savoir s'il est opposable par le possesseur final. Si ce n'est pas le cas, on passe à une étape 266 de test, pour savoir si le ticket est opposable par l'acheteur.

Si ce n'est pas le cas, on passe à une étape 268 lors de laquelle on ajoute au message de réponse le numéro de série du ticket et la mention «opposition impossible ». Suite à l'étape 268, on passe à l'étape 258.

Suite à l'étape 266, si le ticket est considéré comme opposable par l'acheteur, on passe à une étape 270 de test, pour savoir si l'identité de l'acheteur a déjà été contrôlée pour un ticket précédent.

Si ce n'est pas le cas, on contrôle l'identité de l'acheteur lors d'une étape 272. Cette étape, par exemple, est la même que l'étape 228 de la figure 10.

Si l'identité entrée par l'utilisateur est mauvaise, on passe à l'étape 268.

Sinon, on passe à une étape 274, lors de laquelle le serveur de gestion 24 modifie l'état du ticket, pour le mettre en état d'opposition par l'acheteur, et lors de laquelle on enregistre dans les moyens de stockage 40 que l'identité de l'acheteur a déjà été contrôlée. Suite à cette étape 274, on passe à l'étape 256.

On passe également à l'étape 274 à partir de l'étape 270 si l'issue de cette étape 270 de test conclut que l'identité de l'acheteur a déjà été contrôlée pour un ticket précédent.

Il apparaît clairement qu'un procédé de fourniture d'accès selon l'invention améliore la sécurité des échanges, notamment lors de la fourniture de la clé de décryptage, limitant ainsi les risques de piratage et de fraude.

## Revendications

1. Procédé de fourniture d'accès à un contenu crypté destiné à être diffusé sur un réseau (22) comportant les étapes suivantes :
- la transmission (46) par un terminal (26) d'acquisition de droit d'accès, d'une demande d'accès au contenu à un serveur (24) de gestion de fourniture d'accès ;
- l'émission (48) par le serveur de gestion (24), d'au moins un ticket électronique d'autorisation d'accès au contenu, le ticket comportant un identifiant unique connu du serveur de gestion, cette émission de ticket étant exécutée par le serveur de gestion en réponse à la demande d'accès,
- la réception (64) par le serveur de gestion, d'un signal, dit signal d'identification, comportant l'identifiant du ticket et un identifiant d'un terminal consommateur (28) à partir duquel ce signal d'identification a été émis, et
- l'émission (68) par le serveur de gestion (24) d'un signal comportant une clé de décryptage du contenu destiné à être diffusé, dit signal à clé, cette étape (68) d'émission du signal à dé succédant à l'étape de réception (64),
**caractérisé en ce** en ce que la dé de décryptage est générée à partir d'une clé de cryptage du contenu crypté et de l'identifiant du terminal consommateur (28).

2. Procédé selon la revendication 1, **caractérisé en ce que** le signal à clé comporte en outre des informations permettant au terminal consommateur (28) de se mettre en état de recevoir le contenu diffusé sur un canal de transmission prédéterminé.

3. Procédé selon la revendication 1 ou 2, **caractérisé en ce que** l'étape (48) d'émission de ticket par le serveur de gestion (24) comprend l'émission, vers le terminal d'acquisition de droit d'accès, d'un ensemble d'au moins deux tickets électroniques d'autorisation d'accès à un même contenu.

4. Procédé selon l'une quelconque des revendications 1 à 3, **caractérisé en ce que** le terminal consommateur (28) est différent du terminal (26) d'acquisition de droit d'accès.

5. Procédé selon l'une quelconque des revendications 1 à 4, **caractérisé en ce que** chaque ticket est susceptible d'adopter plusieurs états, le serveur de gestion (24) mémorisant des informations lui permettant de connaître, à chaque instant, l'état de chaque ticket.

6. Procédé selon la revendication 5, **caractérisé en ce que** les états d'un ticket sont choisis parmi un ensemble d'états possibles comprenant :
- un état dans lequel le ticket a été transmis au terminal d'acquisition de droit d'accès, mais n'a pas encore été échangé contre une clé de décryptage ;
- un état dans lequel le ticket a été échangé contre une clé de décryptage ;
- un état dans lequel une opposition sur le ticket a été demandée et obtenue à partir du terminal (26) d'acquisition de droit d'accès ;
- un état dans lequel une opposition sur le ticket a été demandée et obtenue à partir du terminal consommateur (28) ;
- un état dans lequel un remboursement a été demandé et obtenu à partir du terminal (26) d'acquisition de droit d'accès ;
- un état dans lequel un remboursement a été demandé et obtenu à partir du terminal consommateur (28) ;
- un état dans lequel un échange contre avoir a été demandé et obtenu à partir du terminal (26) d'acquisition de droit d'accès ;
- un état dans lequel un échange contre avoir a été demandé et obtenu à partir du terminal consommateur (28) ;
- un état dans lequel le ticket est invalidé ; et
- un état dans lequel l'utilisation du ticket est suspendue.

7. Procédé selon la revendication 6, **caractérisé en ce que** si le serveur de gestion (24) reçoit un signal d'identification comportant l'identifiant d'un ticket, déjà échangé contre une clé à partir d'un premier terminal consommateur, associé à l'identifiant d'un second terminal consommateur différent du premier terminal, alors le serveur de gestion interdit l'émission du signal à clé vers le second terminal consommateur.

8. Procédé selon la revendication 7, **caractérisé en ce que** si le serveur de gestion (24) reçoit un signal d'identification comportant l'identifiant d'un ticket déjà échangé contre une clé à partir d'un premier terminal consommateur, associé à l'identifiant d'un second terminal consommateur différent du premier terminal, alors le serveur de gestion conserve en mémoire l'identifiant du second terminal pour lui interdire tout accès ultérieur à un contenu.

9. Procédé selon l'une quelconque des revendications 1 à 8, **caractérisé en ce que** la transmission (64) du signal d'identification à partir du terminal consommateur (28) vers le serveur de gestion active dans le serveur de gestion des moyens d'identification de ce terminal consommateur.

10. Procédé selon l'une quelconque des revendications 1 à 9, **caractérisé en ce que** le réseau (22) est de type Internet.

11. Procédé selon l'une quelconque des revendications 1 à 10, **caractérisé en ce que** suite à l'émission du ticket électronique d'autorisation d'accès au contenu, le procédé comporte une étape (50, 56, 62) de demande de remboursement du ticket.

12. Procédé selon la revendication 11, **caractérisé en ce que** l'étape (50, 56, 62) de demande de remboursement du ticket déclenche une succession d'étapes comportant :
- une étape (212) de transmission au serveur de gestion (24) d'un signal d'identification comportant l'identifiant du ticket et l'identifiant du terminal (32) à partir duquel la demande de remboursement est émise ;
- une étape (228) de contrôle de l'identité de l'utilisateur ; et
- une étape (230) de remboursement du ticket, notamment par un virement sur un compte bancaire ou sur un compte privé.

13. Procédé selon l'une quelconque des revendications 1à 12, **caractérisé en ce que** suite à l'émission par le serveur de gestion (24) du ticket électronique d'autorisation d'accès au contenu, le procédé comporte une étape (52, 58, 66) de demande d'opposition sur le ticket électronique.

14. Procédé selon la revendication 13, **caractérisé en ce que** l'étape (52, 58, 66) de demande d'opposition sur le ticket électronique déclenche une succession d'étapes comportant :
- une étape (250) lors de laquelle l'état du ticket est testé pour savoir s'il a été échangé contre une clé ;
- une étape (252, 266) de test sur le ticket, pour savoir si ce ticket est opposable ;
- une étape (272) de contrôle de l'identité de l'utilisateur.

15. Procédé selon l'une quelconque des revendications 1 à 14, **caractérisé en ce que** suite à l'émission du ticket électronique d'autorisation d'accès au contenu, le procédé comporte une étape (53, 59, 67) de demande d'échange de ticket électronique.

16. Procédé selon la revendication 15, **caractérisé en ce que** l'étape (53, 59, 67) de demande d'échange de ticket électronique, notamment contre un avoir, déclenche une succession d'étapes comportant :
- une étape (212) de transmission au serveur de gestion (24) d'un signal d'identification comportant l'identifiant du ticket et l'identifiant du terminal à partir duquel la demande d'échange contre avoir a été émise ;
- une étape (228) de contrôle de l'identité de l'utilisateur ; et
- une étape (230) d'échange du ticket, en fournissant un avoir.

17. Serveur (24) de gestion de fourniture d'accès à un contenu crypté destiné à être diffusé sur un réseau, comportant :
- des moyens de réception (46) d'une demande d'accès au contenu;
- des moyens d'émission (68) d'un signal comportant une clef de décryptage du contenu destiné à être diffusé, dit signal à clef,
- des moyens d'émission (48) d'au moins un ticket électronique d'autorisation d'accès au contenu, le ticket comportant un identifiant unique connu du serveur de gestion, ces moyens d'émission de ticket étant activés en réponse à la demande d'accès, et
- des moyens de réception (64) d'un signal, dit signal d'identification, comportant l'identifiant du ticket et un identifiant d'un terminal consommateur (28) à partir duquel ce signal d'identification a été émis, ces moyens de réception étant adaptés pour déclencher l'activation des moyens d'émission (68) du signal à clef,
**caractérisé en ce qu'**il comporte en outre des moyens de génération de la clef de décryptage à partir d'une clef de cryptage du contenu crypté et de l'identifiant du terminal consommateur (28).

18. Système de fourniture d'accès à un contenu crypté destiné à être diffusé sur un réseau (22), **caractérisé en ce qu**'il comprend :
- un serveur (24) de gestion de fourniture d'accès à un contenu crypté selon la revendication 17; et
- un serveur (38) de diffusion sur le réseau (22) de ce contenu crypté comprenant des moyens de transmission du contenu au terminal consommateur (28) dont la demande d'accès a été émise par le terminal (26) d'acquisition de droit d'accès.

19. Système selon la revendication 18, **caractérisé en ce que** les serveurs de gestion (24) et de diffusion (38) partagent une base de données commune (40) contenant des données relatives à la dé de cryptage et/ou de décryptage du contenu et des informations sur le mode de diffusion de ce contenu.

## Claims

1. Method of access providing to an encrypted content intended for broadcasting over a network (22) comprising the following steps:
- the transmission (46) by an access right acquisition terminal (26), of a content access request to a server (24) managing access provision;
- the sending (48) by the management server (24), of at least one electronic ticket authorizing access to the content, the ticket including a unique identifier known to the management server, this ticket being sent by the management server in response to the access request,
- the receipt (64) by the management server, of a so-called identification signal, including the identifier of the ticket and an identifier of a consuming terminal (28) from which this identification signal has been sent, and
- the sending (68) by the management server (24) of a signal including a key for decrypting the content intended for broadcasting, called a key signal, this step (68) for sending the key signal following the receipt step (64),
**characterized in that** the decryption key is generated from an encrypted content encryption key and the identifier of the consuming terminal (28).

2. Method according to Claim 1, **characterized in that** the key signal also includes information used by the consuming terminal (28) to adopt a state for receiving the content broadcast over a predetermined transmission channel.

3. Method according to Claim 1 or 2, **characterized in that** the step (48) for the sending of a ticket by the management server (24) includes the sending, to the access right acquisition terminal, of a set of at least two electronic tickets authorizing access to one and the same content.

4. Method according to any one of Claims 1 to 3, **characterized in that** the consuming terminal (28) is different from the access right acquisition terminal (26).

5. Method according to any one of Claims 1 to 4, **characterized in that** each ticket is liable to adopt a number of states, the management server (24) storing information enabling it to know the state of each ticket at all times.

6. Method according to Claim 5, **characterized in that** the states of a ticket are chosen from a set of possible states including:
- a state in which the ticket has been transmitted to the access right acquisition terminal, but has not yet been exchanged for a decryption key;
- a state in which the ticket has been exchanged for a decryption key;
- a state in which an opposition to the ticket has been requested and obtained from the access right acquisition terminal (26);
- a state in which an opposition to the ticket has been requested and obtained from the consuming terminal (28);
- a state in which a refund has been requested and obtained from the access right acquisition terminal (26) ;
- a state in which a refund has been requested and obtained from the consuming terminal (28);
- a state in which an exchange for credit has been requested and obtained from the access right acquisition terminal (26);
- a state in which an exchange for credit has been requested and obtained from the consuming terminal (28);
- a state in which the ticket is invalidated; and
- a state in which the use of the ticket is suspended.

7. Method according to Claim 6, **characterized in that**, if the management server (24) receives an identification signal including the identifier of a ticket, already exchanged for a key from a first consuming terminal, associated with the identifier of a second consuming terminal that is different from the first terminal, then the management server prevents the sending of the key signal to the second consuming terminal.

8. Method according to Claim 7, **characterized in that**, if the management server (24) receives an identification signal including the identifier of a ticket already exchanged for a key from a first consuming terminal, associated with the identifier of a second consuming terminal that is different from the first terminal, then the management server stores in memory the identifier of the second terminal to prevent any subsequent access from it to a content.

9. Method according to any one of Claims 1 to 8, **characterized in that** the transmission (64) of the identification signal from the consuming terminal (28) to the management server activates in the management server means of identifying this consuming terminal.

10. Method according to any one of Claims 1 to 9, **characterized in that** the network (22) is of Internet type.

11. Method according to any one of Claims 1 to 10, **characterized in that**, following the sending of the electronic ticket authorizing access to the content, the method includes a step (50, 56, 62) for requesting a refund of the ticket.

12. Method according to Claim 11, **characterized in that** the step (50, 56, 62) for requesting a refund of the ticket triggers a succession of steps including:
- a step (212) for transmission to the management server (24) of an identification signal including the identifier of the ticket and the identifier of the terminal (32) from which the refund request is sent,
- a step (228) for checking the identity of the user; and
- a step (230) for refunding the ticket, in particular by a transfer to a bank account or to a private account.

13. Method according to any one of Claims 1 to 12, **characterized in that**, following the sending by the management server (24) of the electronic ticket authorizing access to the content, the method includes a step (52, 58, 66) for requesting opposition to the electronic ticket.

14. Method according to Claim 13, **characterized in that** the step (52, 58, 66) for requesting opposition to the electronic ticket triggers a succession of steps including:
- a step (250) in which the state of the ticket is tested to know if it has been exchanged for a key;
- a step (252, 266) for testing the ticket, to know if the ticket can be opposed;
- a step (272) for checking the identity of the user.

15. Method according to any one of Claims 1 to 14, **characterized in that**, following the sending of the electronic ticket authorizing access to the content, the method includes a step (53, 59, 67) for requesting the exchange of an electronic ticket.

16. Method according to Claim 15, **characterized in that** the step (53, 59, 67) for requesting the exchange of an electronic ticket, in particular for a credit, triggers a succession of steps including:
- a step (212), for transmission to the management server (24) of an identification signal including the identifier of the ticket and the identifier of the terminal from which the request to exchange for credit was sent;
- a step (228) for checking the identity of the user; and
- a step (230) for exchanging the ticket, supplying a credit.

17. Server (24) managing the provision of access to an encrypted content intended for broadcasting over a network, including:
- means (46) of receiving a request to access the content;
- means (68) of sending a signal including a key for decrypting the content intended for broadcasting, called a key signal;
- means (48) of sending at least one electronic ticket authorizing access to the content, the ticket including a unique identifier known to the management server, these ticket sending means being activated in response to the access request; and
- means (64) of receiving a so-called identification signal, including the identifier of the ticket and an identifier of a consuming terminal (28) from which this identification signal has been sent, these reception means being designed to trigger the activation of the means (68) of sending the key signal,
**characterized in that** it also includes means of generating the decryption key from an encrypted content encryption key and the identifier of the consuming terminal (28).

18. System for access providing to an encrypted content intended for broadcasting over a network (22), **characterized in that** it includes:
- a server (24) managing the provision of access to an encrypted content according to Claim 17; and
- a server (38) for broadcasting over the network (22) this encrypted content, including means of transmitting the content to the consuming terminal (28) for which the access request has been sent by the access right acquisition terminal (26).

19. System according to Claim 18, **characterized in that** the management (24) and broadcast (38) servers share a common database (40) containing data concerning the key for encrypting and/or decrypting the content and information on the method of broadcasting this content.

## Patentansprüche

1. Verfahren zur Bereitstellung eines Zugangs zu einem über ein Netzwerk (22) zu sendenden verschlüsselten Inhalt, das die folgenden Schritte aufweist:
- die Übertragung (46) eines Antrags auf Zugang zum Inhalt an einen Verwaltungsserver (24) der Zugangsbereitstellung durch ein Terminal (26) zum Erwerb eines Zugangsrechts,
- das Senden (48) mindestens eines elektronischen Tickets der Zugangsberechtigung zum Inhalt durch den Verwaltungsserver (24), wobei das Ticket eine dem Verwaltungsserver bekannte Benutzeridentifizierung enthält, wobei diese Ticketversendung vom Verwaltungsserver als Antwort auf den Zugangsantrag ausgeführt wird,
- den Empfang (64) eines Identifizierungssignal genannten Signals durch den Verwaltungsserver, das die Benutzeridentifizierung des Tickets und die Benutzeridentifizierung eines Verbraucherterminals (28) enthält, von dem aus dieses Identifizierungssignal gesendet wurde, und
- das Senden (68) eines Schlüsselsignal genannten Signals, das einen Entschlüsselungsschlüssel des zu sendenden Inhalts enthält, durch den Verwaltungsserver (24), wobei dieser Schritt (68) des Sendens des Schlüsselsignals auf den Empfangsschritt (64) folgt,
**dadurch gekennzeichnet, dass** der Entschlüsselungsschlüssel ausgehend von einem Verschlüsselungsschlüssel des verschlüsselten Inhalts und der Benutzeridentifizierung des Verbraucherterminals (28) erzeugt wird.

2. Verfahren nach Anspruch 1, **dadurch gekennzeichnet, dass** das Schlüsselsignal außerdem Informationen enthält, die es dem Verbraucherterminal (28) ermöglichen, sich in den Zustand des Empfangs des auf einem vorbestimmten Übertragungskanal gesendeten Inhalts zu versetzen.

3. Verfahren nach Anspruch 1 oder 2, **dadurch gekennzeichnet, dass** der Schritt (48) des Ticketversendens durch den Verwaltungsserver (24) das Senden einer Einheit von mindestens zwei elektronischen Zugangsberechtigungstickets zum gleichen Inhalt zum Zugangsrechterwerb-Terminal umfasst.

4. Verfahren nach einem der Ansprüche 1 bis 3, **dadurch gekennzeichnet, dass** das Verbraucherterminal (28) sich vom Zugangsrechterwerb-Terminal (26) unterscheidet.

5. Verfahren nach einem der Ansprüche 1 bis 4, **dadurch gekennzeichnet, dass** jedes Ticket mehrere Zustände annehmen kann, wobei der Verwaltungsserver (24) Informationen speichert, die es ihm ermöglichen, zu jedem Zeitpunkt den Zustand jedes Tickets zu kennen.

6. Verfahren nach Anspruch 5, **dadurch gekennzeichnet, dass** die Zustände eines Tickets aus einer Gruppe von möglichen Zuständen ausgewählt werden, die enthält:
- einen Zustand, in dem das Ticket an das Zugangsrechterwerb-Terminal übertragen, aber noch nicht gegen einen Entschlüsselungsschlüssel eingetauscht wurde;
- einen Zustand, in dem das Ticket gegen einen Entschlüsselungsschlüssel eingetauscht wurde;
- einen Zustand, in dem das Sperren des Tickets vom Zugangsrechterwerb-Terminal (26) beantragt und erhalten wurde;
- einen Zustand, in dem das Sperren des Tickets vom Verbraucherterminal (28) beantragt und erhalten wurde;
- einen Zustand, in dem eine Erstattung vom Zugangsrechterwerb-Terminal (26) beantragt und erhalten wurde;
- einen Zustand, in dem eine Erstattung vom Verbraucherterminal (28) beantragt und erhalten wurde;
- einen Zustand, in dem ein Eintauschen gegen ein Guthaben vom Zugangsrechterwerb-Terminal (26) beantragt und erhalten wurde;
- einen Zustand, in dem ein Eintauschen gegen ein Guthaben vom Verbraucherterminal (28) beantragt und erhalten wurde;
- einen Zustand, in dem das Ticket annulliert wird; und
- ein Zustand, in dem die Nutzung des Tickets ausgesetzt wird.

7. Verfahren nach Anspruch 6, **dadurch gekennzeichnet, dass**, wenn der Verwaltungsserver (24) ein die Benutzeridentifizierung eines bereits ausgehend von einem ersten Verbraucherterminal gegen einen Schlüssel eingetauschten Tickets enthaltendes Identifizierungssignal empfängt, das der Benutzeridentifizierung eines zweiten, vom ersten Terminal unterschiedlichen Verbraucherterminals zugeordnet ist, der Verwaltungsserver das Senden des Schlüsselsignals an das zweite Verbraucherterminal verbietet.

8. Verfahren nach Anspruch 7, **dadurch gekennzeichnet, dass**, wenn der Verwaltungsserver (24) ein die Benutzeridentifizierung eines bereits ausgehend von einem ersten Verbraucherterminal gegen einen Schlüssel ausgetauschten Tickets enthaltendes Identifizierungssignal empfängt, das der Benutzeridentifizierung eines zweiten, vom ersten Terminal unterschiedlichen Verbraucherterminals zugeordnet ist, der Verwaltungsserver die Benutzeridentifizierung des zweiten Terminals im Speicher behält, um ihm jeden späteren Zugang zu einem Inhalt zu verbieten.

9. Verfahren nach einem der Ansprüche 1 bis 8, **dadurch gekennzeichnet, dass** die Übertragung (64) des Identifizierungssignals vom Verbraucherterminal (28) zum Verwaltungsserver im Verwaltungsserver Identifizierungsmittel dieses Verbraucherterminals aktiviert.

10. Verfahren nach einem der Ansprüche 1 bis 9, **dadurch gekennzeichnet, dass** das Netzwerk (22) vom Typ Internet ist.

11. Verfahren nach einem der Ansprüche 1 bis 10, **dadurch gekennzeichnet, dass** nach dem Senden des elektronischen Zugangsberechtigungstickets zum Inhalt das Verfahren einen Schritt (50, 56, 62) eines Ticket-Rückerstattungsantrags enthält.

12. Verfahren nach Anspruch 11, **dadurch gekennzeichnet, dass** der Schritt (50, 56, 62) des Ticket-Rückerstattungsantrags eine Folge von Schritten auslöst, die enthält:
- einen Schritt (212) der Übertragung eines Identifizierungssignals an den Verwaltungsserver (24), das die Benutzeridentifizierung des Tickets und die Benutzeridentifizierung des Terminals (32) enthält, von dem aus der Rückerstattungsantrag gesendet wurde;
- einen Schritt (228) der Überprüfung der Identität des Benutzers; und
- einen Schritt (230) der Rückerstattung des Tickets, insbesondere durch eine Überweisung auf ein Bankkonto oder auf ein Privatkonto.

13. Verfahren nach einem der Ansprüche 1 bis 12, **dadurch gekennzeichnet, dass** nach dem Senden des elektronischen Zugangsberechtigungstickets zum Inhalt durch den Verwaltungsserver (24) das Verfahren einen Schritt (52, 58, 66) des Antrags zum Sperren des elektronischen Tickets enthält.

14. Verfahren nach Anspruch 13, **dadurch gekennzeichnet, dass** der Schritt (52, 58, 66) des Antrags zum Sperren des elektronischen Tickets eine Folge von Schritten auslöst, die enthält:
- einen Schritt (250), in dem der Zustand des Tickets getestet wird, um zu wissen, ob es gegen einen Schlüssel eingetauscht wurde;
- einen Schritt (252, 266) des Tests des Tickets, um zu wissen, ob dieses Ticket sperrbar ist;
- einen Schritt (272) der Überprüfung der Identität des Benutzers.

15. Verfahren nach einem der Ansprüche 1 bis 14, **dadurch gekennzeichnet, dass** nach dem Senden des elektronischen Zugangsberechtigungstickets zum Inhalt das Verfahren einen Schritt (53, 59, 67) des Antrags zum Eintauschen eines elektronischen Tickets aufweist.

16. Verfahren nach Anspruch 15, **dadurch gekennzeichnet, dass** der Schritt (53, 59, 67) des Antrags zum Eintauschen des elektronischen Tickets, insbesondere gegen ein Guthaben, eine Folge von Schritten auslöst, die enthält:
- einen Schritt (212) der Übertragung eines Identifizierungssignals an den Verwaltungsserver (24), das die Benutzeridentifizierung des Tickets und die Benutzeridentifizierung des Terminals enthält, von dem aus der Antrag zum Eintauschen des Tickets gesendet wurde;
- einen Schritt (228) der Überprüfung der Identität des Benutzers; und
- einen Schritt (230) des Eintauschens des Tickets durch Lieferung eines Guthabens.

17. Verwaltungsserver (24) zur Bereitstellung eines Zugangs zu einem über ein Netzwerk zu sendenden verschlüsselten Inhalt, der aufweist:
- Mittel (46) zum Empfang eines Antrags auf Zugang zum Inhalt;
- Mittel (68) zum Senden eines Schlüsselsignal genannten Signals, das einen Entschlüsselungsschlüssel des zu sendenden Inhalts enthält,
- Mittel (48) zum Senden mindestens eines elektronischen Zugangsberechtigungstickets zum Inhalt, wobei das Ticket eine dem Verwaltungsserver bekannte Benutzeridentifizierung enthält, wobei diese Mittel zum Senden eines Tickets als Antwort auf den Zugangsantrag aktiviert werden, und
- Mittel (64) zum Empfang eines Identifizierungssignal genannten Signals, das die Benutzeridentifizierung des Tickets und eine Benutzeridentifizierung eines Verbraucherterminals (28) enthält, von dem aus dieses Identifizierungssignal gesendet wurde, wobei diese Empfangsmittel ausgelegt sind, um die Aktivierung der Mittel (68) zum Senden des Schlüsselsignals auszulösen,
**dadurch gekennzeichnet, dass** er außerdem Mittel zur Erzeugung des Entschlüsselungsschlüssels ausgehend von einem Verschlüsselungsschlüssel des verschlüsselten Inhalts und der Benutzeridentifizierung des Verbraucherterminals (28) aufweist.

18. System zur Bereitstellung eines Zugangs zu einem über ein Netzwerk (22) zu sendenden verschlüsselten Inhalt, **dadurch gekennzeichnet, dass** es aufweist:
- einen Verwaltungsserver (24) zur Bereitstellung eines Zugangs zu einem verschlüsselten Inhalt nach Anspruch 17; und
- einen Server (38) zum Senden dieses verschlüsselten Inhalts auf dem Netzwerk (22), der Mittel zur Übertragung des Inhalts an das Verbraucherterminal (28) aufweist, dessen Zugangsantrag vom Zugangsrechterwerb-Terminal (26) gesendet wurde.

19. System nach Anspruch 18, **dadurch gekennzeichnet, dass** der Verwaltungsserver (24) und der Sendeserver (38) sich eine gemeinsame Datenbank (40) teilen, die Daten bezüglich des Verschlüsselungs- und/oder des Entschlüsselungsschlüssels des Inhalts und Informationen über den Sendemodus dieses Inhalts enthält.
